# EUROPÄISCHE PATENTSCHRIFT

(11) **EP 0 500 871 B1**
(45) Veröffentlichungstag und Bekanntmachung des Hinweises auf die Patenterteilung: **28.02.1996**
(21) Anmeldenummer: 91915850.1
(22) Anmeldetag: 10.09.1991
(51) Int. Cl.: B60S 1/32

(54) **WISCHARM, INSBESONDERE FÜR SCHEIBENWISCHANLAGEN AN KRAFTFAHRZEUGEN**
WIPER ARM, ESPECIALLY FOR THE WINDSCREEN WIPER INSTALLATIONS OF MOTOR VEHICLES
BRAS D'ESSUIE-GLACE, EN PARTICULIER POUR SYSTEMES D'ESSUIE-GLACE DE VEHICULES AUTOMOBILES

(30) Priorität: 15.09.1990 DE 4029342
(43) Veröffentlichungstag der Anmeldung: 02.09.1992
(73) Patentinhaber: ITT Automotive Europe GmbH, D-60488 Frankfurt am Main (DE)
(72) Erfinder: EGNER-WALTER, Bruno, D-7100 Heilbronn (DE)
(86) Internationale Anmeldenummer: EP9101716
(87) Internationale Veröffentlichungsnummer: WO9205052

(56) Entgegenhaltungen:
- EP-A- 0 013 970
- EP-A- 0 368 090
- EP-A- 0 396 087

## Beschreibung

Die Erfindung betrifft einen Wischarm, insbesondere für Scheibenwischanlagen an Kraftfahrzeugen, mit einem Gelenkteil und einer Wischstange.

Bei herkömmlichen Wischarmen der eingangs genannten Art sind das Gelenkteil und die Wischstange geradlinige und in Flucht liegende Bauteile, deren einzelne Partien unterschiedliche Abstände zu der unteren Verbindungsstelle zwischen der Karosserie und der Windschutzscheibe aufweisen. Dadurch wird der ästhetische Eindruck dieses Bereiches des Kraftfahrzeugs negativ beeinflußt. Handelt es sich hierbei um Kraftfahrzeuge mit einem zwischen der Windschutzscheibe und der Haube ausgebildeten Haubenspalt, in den der Wischarm einfahrbar ist, dann muß dieser breiter sein als die lichte Höhe bzw. Dicke des Wischarms.

Aus der EP-A-0 368 090 ist ein Wischarm bekannt, bei welchem die Wischstange an ihrem hakenförmig umgebogenen Ende schwenkbar mit einem Wischblatt verbunden ist, welches eine Windleitschaufel besitzt, die sich unmittelbar an die Unterkante der in Windanströmrichtung vornliegenden Seitenwange des Wischblatttragbügels anschließt. Mit dem Ziel verbesserter Strömungsverhältnisse ist die vordere, der Windschutzscheibe nächstliegende Kante der Windleitschaufel der Wölbung der Windschutzscheibe angepaßt bogenförmig ausgebildet, um einen möglichst geringen Abstand zwischen Windschutzscheibe und Windleitschaufel zu ermöglichen. Zur weiteren Verbesserung der Srömungsverhältnisse ist die Wischstange an dem einen Ende der Windleitschaufel derart seitlich und in Richtung auf die Windschutzscheibe gekröpft, daß die Wischstange etwa ab der Kröpfung seitlich neben dem Wischblatt verläuft. Dieser seitlich neben dem Wischblatt verlaufende Abschnitt der Wischstange setzt sich gewissermaßen in Höhe des bogenförmigen Randes der Windleitschaufel neben dem Wischblatt fort, wobei sich die der Wölbung der Windschutzscheibe angepaßte Bogenform zumindest in diesem Bereich der Wischstange fortsetzt.

Die Aufgabe der Erfindung besteht darin, einen Wischarm mit einer an einem Gelenkteil befestigten Wischstange, die zumindest bereichsweise bogenförmig ausgebildet und der Wölbung der Windschutzscheibe angepaßt ist (Wischarm, der jenem z.B. nach der EP-A-0 368 090 gattungsgemäß ausgebildet ist), so weiterzubilden, daß der ästhetische Eindruck des Wischarms verbessert und/oder die Höhe des Haubenspaltes verringert werden kann.

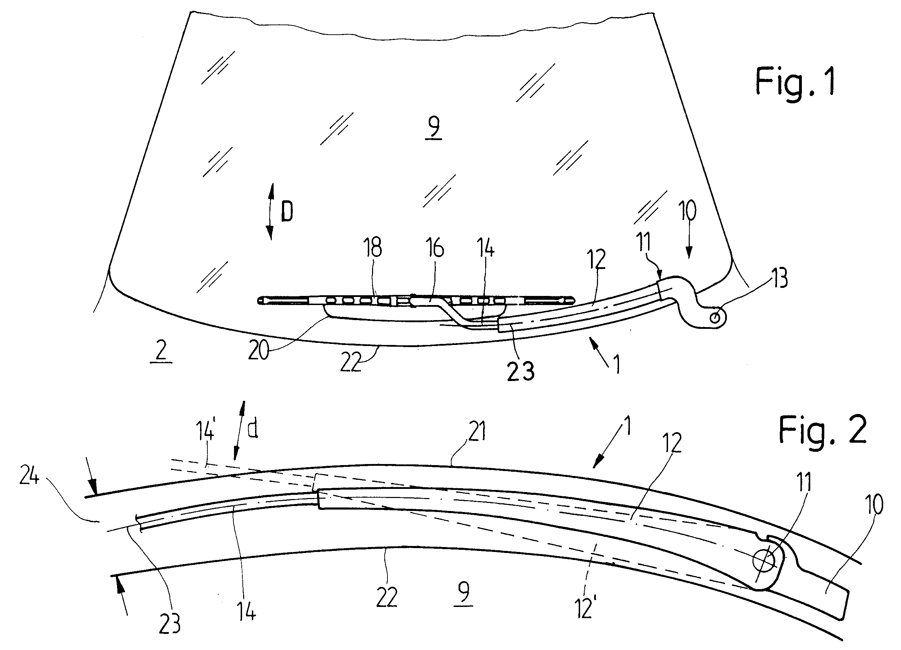

Die gestellte Aufgabe wird dadurch gelöst, daß das Gelenkteil des Wischarms bogenförmig ausgebildet ist und die Bogenform des Gelenkteils der Wölbung der Windschutzscheibe und/oder der Wölbung der Haube an deren der Windschutzscheibe zugewandtem Rand (Fig. 2) und/oder an die Bogenform der Verbindungsstelle zwischen Windschutzscheibe und Karosserie des Kraftfahrzeuges (Fig. 1) angepaßt ist.

Der Wischarm ist somit durch die gebogene Gestalt des Gelenkteils charakterisiert. Somit ist eine besonders geringe Bauhöhe des Wischarms erreichbar und in bezug auf herkömmliche Wischarme ist es möglich, den Haubenspalt zu verringern.

Weitere zweckmäßige und vorteilhafte Ausgestaltungen der Erfindung gehen aus den Unteransprüchen hervor.

Eine weitere Verbesserung hinsichtlich des ästhetischen Eindrucks des Wischarms bzw. der Verringerung dem Höhe des Haubenspaltes wird erreicht, wenn auch die an dem Gelenkteil befestigte Wischstange bogenförmig ausgebildet ist und ihre Bogenform an die Wölbung der Windschutzscheibe und/oder die Wölbung der Haube an deren der Windschutzscheibe zugewandtem Rand und/oder an die Bogenform der Verbindungsstelle zwischen Windschutzscheibe und Karosserie des Kraftfahrzeuges angepaßt ist.

Eine besonders zweckmäßige Ausgestaltung der Erfindung sieht vor, daß die der Windschutzscheibe bzw. der Verbindungsstelle zugewandte Seite des Gelenkteils und der Wischstange dem Verlauf der Windschutzscheibe bzw. der Verbindungsstelle angepaßt ist. Hierbei ist zweckmäßig, wenn die Längsmittellinie des Wischarms annähernd parallel zur Verbindungsstelle verläuft. Bei diesen Maßnahmen geht es im wesentlichen darum, die miteinander verbundenen und/oder zusammenarbeitenden Bauteile so aufeinander abzustimmen, daß eine annähernd einheitliche Geometrie der in Rede stehenden Teile des Kraftfahrzeugs erreichbar ist.

Handelt es sich um Kraftfahrzeuge, bei denen zwischen der Haube und der Windschutzscheibe ein längs der Verbindungsstelle sich erstreckender Spalt ausgebildet ist, dann ist es zweckmäßig, wenn die der Haube zugewandte Seite des Wischarms etwa parallel zur Haube verläuft. Durch diese Maßnahme ist es möglich, die Höhe des Haubenspaltes zu minimieren.

Schließlich ist bei einem Wischarm mit einem Spoiler vorgesehen, daß die der Verbindungsstelle zugewandte Seite des Spoilers als Fortsetzung der unteren bogenförmigen Seite des Gelenkteils ausgebildet ist.

Die Erfindung und deren vorteilhafte Ausgestaltungen werden nachstehend anhand der in der Zeichnung dargestellten Ausführungsbeispiele näher erläutert.

Es zeigen:
- Fig. 1: eine Draufsicht einer Windschutzscheibe, in derem unteren Bereich ein Wischarm angeordnet ist, und
- Fig. 2: einen Haubenspalt mit einem darin angeordneten Wischarm.

Der in Fig. 1 dargestellte Wischarm 1 befindet sich in seiner Ausgangs- und Ruhestellung und ist unterhalb der Verbindungsstelle 22 zwischen der Windschutzscheibe 9 und der Karosserie 2 an einer Wischerwelle 13 befestigt. Der Wischarm 1 ist um die Achse der Wischerwelle 13 verschwenkbar, und zwar in Richtung des Doppelpfeiles D. Die Verbindungsstelle 22 ist bogenförmig ausgebildet und erstreckt sich in Richtung des Wischarms 1. Der Wischarm 1 besitzt ein Gelenkteil 12, dessen eines Ende die Wischstange 14 mit einem Wischblatt 18 trägt, während das andere Ende mit einem Befestigungsteil 10 verbunden ist. Das dem Wischarm 1 zugewandte Endstück 16 der Wischstange 14 ist gekröpft, so daß das Wischblatt 18 mit Bezug auf die Längsmittellinie 23 der Wischstange 14 nach oben versetzt ist. An der der Verbindungsstelle 22 zugekehrten Seite des Wischblattes 18 ist ein Spoiler 20 angeordnet, dessen der Verbindungsstelle 22 zugekehrte Seite annähernd parallel mit der Verbindungsstelle 22 verläuft. Die Fig. 1 läßt ferner erkennen, daß mindestens das Gelenkteil 12 bogenförmig ausgebildet und der Bogenform der Verbindungsstelle 22 angepaßt ist. Das kennzeichnende Merkmal des Wischarms 1 ist somit die gebogene Gestalt des Gelenkteils 12. Das um die Achse der Wischerwelle 13 verschwenkbare Befestigungsteil 10 ist in seiner Draufsicht etwa Z-förmig und mit dem Gelenkteil 12 mittels eines Schwenkzapfens 11 gelenkig verbunden, so daß das Gelenkteil 12 einschließlich Wischstange 14 auch in einer Ebene verschwenkbar ist, die etwa senkrecht zur Windschutzscheibe 9 verläuft. Das Befestigungsteil 10 ist mit der Wischerwelle 13 mittels einer nicht näher dargestellten Schraube lösbar verbindbar.

Die Fig. 2 zeigt einen Haubenspalt 24, der durch die Haube 21 und die Verbindungsstelle 22 zwischen der Windschutzscheibe 9 und der Karosserie 2 definiert ist. Mit vollen Linien sind das Gelenkteil 12 sowie ein Teil der Wischstange 14 dargestellt, während mit gestrichelten Linien ein herkömmlicher Wischarm mit einem Gelenkteil 12' und einer Wischstange 14' angedeutet ist. Das teilweise dargestellte Befestigungsteil 10 ist mit dem Gelenkteil 12 mittels eines Schwenkzapfens 11 verbunden, so daß, befindet sich der Wischarm 1 außerhalb des Haubenspalts 24, es in Richtung des Doppelpfeiles d verschwenkbar ist. Dadurch, daß sowohl das Gelenkteil 12 als auch die Wischstange 14 bogenförmig ausgebildet sind und deren Längsmittellinie 23 etwa parallel zur Verbindungsstelle 22 und somit auch zur Haube 21 verläuft, ist es möglich, den Haubenspalt 24 zu minimieren.

Zusammenfassend kann festgestellt werden, daß der vorgeschlagene Wischarm 1 insbesondere durch die gebogene Gestalt des Gelenkteils 12 und der Wischstange 14 gekennzeichnet ist. Somit werden besonders geringe Bauhöhen erzielt. Ein bisher bekanntes Gelenkteil würde einen größeren Haubenspalt benötigen. Vorteilhaft ist eine Kontur, bei der die Gelenkteil-Oberkante dem Haubenverlauf möglichst angeglichen ist. Dies gilt auch für die Wischstange und das Befestigungsteil. Ebenso sollte der Wischarm 1 in seiner Draufsicht dem Haubenverlauf angeglichen werden. Die oben genannten Formen bewirken, daß die Wischarme zum Fahrzeug gehörend wirken und nicht wie Fremdkörper.

## Patentansprüche

1. Wischarm, insbesondere für Scheibenwischanlagen an Kraftfahrzeugen, mit einem Gelenkteil (12) und einer an dem Gelenkteil (12) befestigten Wischstange (14), die zumindest bereichsweise leicht bogenförmig ausgebildet und der Wölbung der Windschutzscheibe (9) angepaßt ist, dadurch **gekennzeichnet**, daß das Gelenkteil (12) bogenförmig ausgebildet ist und daß die Bogenform des Gelenkteils (12) der Wölbung der Windschutzscheibe (9) und/oder der Wölbung der Haube (21) an deren der Windschutzscheibe (9) zugewandtem Rand (Fig. 2) und/oder an die Bogenform der Verbindungsstelle (22) zwischen der Windschutzscheibe (9) und Karosserie (2) des Kraftfahrzeugs (Fig. 1) angepaßt ist.

2. Wischarm nach Anspruch 1, dadurch **gekennzeichnet**, daß auch die an dem Gelenkteil (12) befestigte Wischstange (14) bogenförmig ausgebildet ist und daß die Bogenform der Wischstange (14) der Wölbung der Windschutzscheibe (9) und/oder der Wölbung der Haube (21) an deren der Windschutzscheibe (9) zugewandtem Rand (Fig. 2) und/oder an die Bogenform der Verbindungsstelle (22) zwischen Windschutzscheibe (9) und Karosserie (2) des Kraftfahrzeugs (Fig. 1) angepaßt ist.

3. Wischarm nach Anspruch 2, dadurch **gekennzeichnet**, daß die der Windschutzscheibe (9) bzw. der Verbindungsstelle (22) zugewandte Seite des Gelenkteils (12) und der Wischstange (14) der Wölbung der Windschutzscheibe (9) bzw. der Bogenform der Verbindungsstelle (22) angepaßt ist.

4. Wischarm nach einem der vorhergehenden Ansprüche 2 oder 3, dadurch **gekennzeichnet**, daß die Längsmittellinie (23) des Wischarms (1) annähernd parallel zur Verbindungsstelle (22) verläuft.

5. Wischarm nach einem der vorhergehenden Ansprüche für Kraftfahrzeuge, bei denen zwischen der Haube (21) und der Windschutzscheibe (9) ein längs der Verbindungsstelle (22) sich erstreckender Spalt (24) ausgebildet ist, dadurch **gekennzeichnet**, daß die der Haube (21) zugewandte Seite der Wischstange (14) und/oder des Gelenkteils (12) etwa parallel zur Haube (21) verläuft.

6. Wischarm nach einem der vorhergehenden Ansprüche mit einem Spoiler (20), dadurch **gekennzeichnet**, daß die der Verbindungsstelle (22) zugewandte Seite des Spoilers (20) als Fortsetzung der unteren bogenförmigen Seite des Gelenkteils (12) ausgebildet ist.

## Claims

1. Wiper arm, in particular wiper arm for windshield wiper systems of motor vehicles, including an articulated member (12), and a wiper rod (14) which is secured to the articulated member (12) and has a slightly arcuate design, at least in certain areas, and is adapted to the curvature of the windshield (9),
**characterized** in that the articulated member (12) is of arcuate design, and in that the arcuate shape of the articulated member (12) is adapted to the curvature of the windshield (9) and/or the curvature of the hood (21) at its edge close to the windshield (9) (Figure 2), and/or to the arcuate shape of the connecting area (22) between the windshield (9) and the body (2) of the motor vehicle (Figure 1).

2. Wiper arm as claimed in claim 1,
**characterized** in that the wiper rod (14) secured to the articulated member (12) is of arcuate design also, and in that the arcuate shape of the wiper rod (14) is adapted to the curvature of the windshield (9) and/or the curvature of the hood (21) at its edge close to the windshield (9) (Figure 2), and/or to the arcuate shape of the connecting area (22) between the windshield (9) and the body (2) of the motor vehicle (Figure 1).

3. Wiper arm as claimed in claim 2,
**characterized** in that the side of the articulated member (12) close to the windshield (9) or the connecting area (22), respectively, and the wiper rod (14) is adapted to the curvature of the windshield (9) or the arcuate shape of the connecting area (22), respectively.

4. Wiper arm as claimed in any one of the preceding claims 2 or 3,
**characterized** in that the longitudinal median line (23) of the wiper arm (1) extends approximately in parallel to the connecting area (22).

5. Wiper arm, as claimed in any one of the preceding claims, for use on motor vehicles, where a gap (24) extends along the connecting area (22) between the hood (21) and the windshield (9),
**characterized** in that the side of the wiper rod (14) and/or the articulated member (12) close to the hood (21) extends approximately in parallel to the hood (21).

6. Wiper arm as claimed in any one of the preceding claims, including a spoiler (20),
**characterized** in that the side of the spoiler (20) facing the connecting aea (22) is formed as a continuation of the lower arcuate side of the articulated member (12).

## Revendications

1. Bras d'essuie-glace, en particulier pour systèmes d'essuie-glace sur véhicules automobiles, comportant un élément d'articulation (12) et une tige d'essuie-glace (14) fixée sur l'élément d'articulation (12), la tige étant, par endroits au moins, réalisée de façon légèrement cintrée en forme d'arc et adaptée à la courbure du pare-brise (9),
caractérisé en ce que l'élément d'articulation (12) est réalisé en forme d'arc et en ce que la forme d'arc de l'élément d'articulation (12) est adaptée à la courbure du pare-brise (9) et/ou à la courbure du capot (21), au niveau du bord de celui-ci, qui se situe face au pare-brise (9) (figure 2), et/ou à la forme d'arc de la ligne de jonction (22) entre le pare-brise (9) et la carrosserie (2) du véhicule automobile (figure 1).

2. Bras d'essuie-glace selon la revendication 1, caractérisé en ce que la tige d'essuie-glace (14) fixée sur l'élément d'articulation (12) est aussi réalisée en forme d'arc, et en ce que la forme d'arc de la tige d'essuie-glace (14) est adaptée à la courbure du pare-brise (9) et/ou à la courbure du capot (21), au niveau du bord de celui-ci, qui se situe face au pare-brise (9) (figure 2), et/ou à la forme d'arc de la ligne de jonction (22) entre le pare-brise (9) et la carrosserie (2) du véhicule automobile (figure 1).

3. Bras d'essuie-glace selon la revendication 2, caractérisé en ce que le côté de l'élément d'articulation (12) et de la tige d'essuie-glace (14), qui est orienté face au pare-brise (9) ou à la ligne de jonction (22), est adapté à la courbure du pare-brise (9) ou à la forme d'arc de la ligne de jonction (22).

4. Bras d'essuie-glace selon l'une des revendications précédentes 2 ou 3, caractérisé en ce que la ligne médiane longitudinale (23) du bras d'essuie-glace (1) s'étend à peu près parallèlement à la ligne de jonction (22).

5. Bras d'essuie-glace selon l'une des revendications précédentes, pour véhicules automobiles, dans lesquels une fente (24) s'étendant le long de la ligne de jonction (22) est aménagée entre le capot (21) et le pare-brise (9),
caractérisé en ce que le côté de la tige d'essuie-glace (14) et/ou de l'élément d'articulation (12), qui est tourné face au capot (21), s'étend à peu près parallèlement au capot (22).

6. Bras d'essuie-glace selon l'une des revendications précédentes, comportant une ailette (20), caractérisé en ce que le côté de l'ailette (20), qui est tourné face à la ligne de jonction (22), est réalisé en tant que prolongement du côté inférieur en forme d'arc de l'élément d'articulation (12).
